# EUROPÄISCHE PATENTSCHRIFT

(11) **EP 2 825 766 B1**
(45) Veröffentlichungstag und Bekanntmachung des Hinweises auf die Patenterteilung: **15.05.2019**
(21) Anmeldenummer: 13704423.6
(22) Anmeldetag: 13.02.2013
(51) Int. Cl.: F02M 63/02, F02M 63/00

(54) **DRUCKREGELVENTIL ZUR DRUCKREGELUNG IN EINEM KRAFTSTOFF- HOCHDRUCKSPEICHER EINER BRENNKRAFTMASCHINE**
PRESSURE REGULATING VALVE FOR REGULATING PRESSURE IN A HIGH-PRESSURE FUEL ACCUMULATOR FOR AN INTERNAL COMBUSTION ENGINE
SOUPAPE DE RÉGULATION DE PRESSION DESTINÉE À RÉGULER LA PRESSION DANS UN RÉSERVOIR DE CARBURANT À HAUTE PRESSION POUR UN MOTEUR À COMBUSTION INTERNE

(30) Priorität: 15.03.2012 FR 1252350
(43) Veröffentlichungstag der Anmeldung: 21.01.2015
(73) Patentinhaber: Robert Bosch GmbH, 70442 Stuttgart (DE)
(72) Erfinder: COMBE, Raphael, F-69008 Lyon (FR); JULIEN, Jean-Roch, F-69960 Corbas (FR); BINSSE, Sebastien, F-69100 Villeurbanne (FR); CHARVET, Olivier, F-69720 Saint Laurent de Mure (FR); LACROIX, David, F-69230 Saint-Genis Laval (FR); DUMONT, Tony, F-69300 Caluire (FR)
(86) Internationale Anmeldenummer: PCT/EP2013/052884
(87) Internationale Veröffentlichungsnummer: WO 2013/135450

(56) Entgegenhaltungen:
- EP-A1- 1 748 240
- WO-A1-2012/055638
- WO-A2-2012/055639
- FR-A1- 2 899 949

## Beschreibung

Die Erfindung betrifft ein Druckregelventil zur Druckregelung in einem Kraftstoff-Hochdruckspeicher einer Verbrennungskraftmaschine mit den Merkmalen des Oberbegriffs des Anspruchs 1.

### Stand der Technik

Ein derartiges Druckregelventil ist beispielsweise aus der Offenlegungsschrift DE 10 2004 002 964 A1 bekannt. Es umfasst ein in einem Ventilraum aufgenommenes und über einen Magnetaktor betätigbares Schließelement, das eine Verbindung vom Hochdruckspeicher in eine Niederdruckleitung verschließt oder freigibt. Ferner umfasst das Ventil ein Federelement, das derart angeordnet ist, dass bei Stillstand der Verbrennungskraftmaschine die Verbindung vom Hochdruckspeicher in die Niederdruckleitung freigegeben ist. Das Federelement ist einerseits an einer Ankerplatte und andererseits an einem radialen Absatz einer in einem Ventilgehäuse ausgebildeten Stufenbohrung abgestützt, in welcher ferner ein mit der Ankerplatte verbundener Ventilkolben aufgenommen ist. Wird der Magnetaktor bestromt, werden die Ankerplatte und der Ventilkolben entgegen der Federkraft des Federelementes in Richtung eines Ventilsitzes bewegt, wobei der Ventilkolben das Schließelement in den Ventilsitz drückt. In dieser Schaltstellung ist die Verbindung des Hochdruckspeichers in die Niederdruckleitung verschlossen. Mit Beendigung der Bestromung des Magnetaktors wird eine Rückstellung der Ankerplatte und des Ventilkolbens über die Federkraft des Federelementes bewirkt, wodurch das Schließelement vom Ventilsitz abhebt und das Ventil öffnet. In dieser Schaltstellung ist die Verbindung des Hochdruckspeichers in die Niederdruckleitung freigegeben, wobei der aus dem Hochdruckspeicher über die Niederdruckleitung abströmende Kraftstoff einem Kraftstoffvorratsbehälter zugeführt wird.

Über die Niederdruckleitung sowie ein hieran angeschlossenes Niederdrucksystem, welches in der Regel einen Kraftstoffvorratsbehälter, eine Vorförderpumpe und den Zulaufbereich einer Hochdruckpumpe umfasst, können Druckschwingungen auf das Druckregelventil übertragen werden. Diese Druckschwingungen können zur Folge haben, dass der Ventilkolben des Druckregelventils unkontrollierbare Bewegungen ausführt und das Druckregelventil ggf. unbeabsichtigt öffnet. Dies gilt es zu vermeiden, da der beim Öffnen des Druckregelventils im Hochdruckspeicher bewirkte Druckabfall zu Instabilitäten und ggf. zum Unterschreiten eines zum Starten des Motors erforderlichen Mindestdrucks führen kann. Ferner kann das Druckregelventil über den Niederdruckbereich zu Eigenschwingungen angeregt werden, welche zu unerwünschten Druckspitzen im Niederdrucksystem und/oder zu unangenehmen Geräuschentwicklungen führen.

Der vorliegenden Erfindung liegt daher die Aufgabe zu Grunde, ein verbessertes Druckregelventil zur Druckregelung in einem Kraftstoff-Hochdruckspeicher anzugeben, das eine Kompensation derartiger Druckschwingungen bzw. Druckwellen ermöglicht und damit eine höhere Funktionssicherheit gewährleistet, wobei derartige Druckschwingungen bis zu einem gewissen Maße durch hydraulische Verbindungen zwischen einem Ventilraum und einem Ankerraum ausgeglichen werden können, wie sie beispielsweise in den Offenlegungsschriften EP 1 748 240 A1, WO 2012/055638 A1 und FR 2 899 949 gezeigt sind.

Zur Lösung der Aufgabe wird ein Druckregelventil mit den Merkmalen des Anspruchs 1 vorgeschlagen. Vorteilhafte Weiterbildungen der Erfindung sind in den Unteransprüchen angegeben.

### Offenbarung der Erfindung

Das zur Druckregelung in einem Kraftstoff-Hochdruckspeicher einer Verbrennungskraftmaschine vorgeschlagene Druckregelventil umfasst einen in einer Bohrung eines Ventilgehäuses axial verschiebbar aufgenommenen, auf ein Ventilschließelement in Richtung eines Ventilsitzes einwirkenden Ventilkolben, welcher an seinem dem Ventilsitz abgewandten Ende mit einem Anker einer Magnetbaugruppe zur Betätigung des Druckregelventils verbunden ist. Dabei sind der Anker in einem Ankerraum und das Ventilschließelement in einem Ventilraum aufgenommen. Erfindungsgemäß sind der Ventilraum und der Ankerraum über wenigstens eine im Ventilgehäuse ausgebildete Nut sowie wenigstens eine Drossel hydraulisch verbunden. Die hydraulische Verbindung des Ventilraums mit dem Ankerraum bewirkt eine Vergrößerung des zum Ausgleich etwaiger Druckschwingungen bzw. Druckwellen zur Verfügung stehenden hydraulischen Volumens, wobei durch die Zwischenschaltung wenigstens einer Drossel die Empfindlichkeit des Ventils verringert wird. Denn die Drossel verhindert, dass Druckspitzen vom Ventilraum auf den Ankerraum übertragen werden, welche zu einer unbeabsichtigten Anregung des Ankers und damit zum Öffnen des Ventils führen könnten.

Sofern wenigstens eine Nut zur hydraulischen Verbindung des Ventilraums mit dem Ankerraum vorgesehen ist, ist diese bevorzugt im Wesentlichen axial verlaufend, in der Wandung der den Ventilkolben aufnehmenden Bohrung des Ventilgehäuses ausgebildet. Mit der gegenüberliegenden Wandungsfläche der Außenumfangsfläche des Ventilkolbens bildet die Nut dann einen Kanal aus, der die hydraulische Verbindung gewährleistet. Ergänzend kann wenigstens eine Nut am Anker ausgebildet sein. Der Anker kann die Nut im Bereich seiner Außenumfangsfläche und/oder im Bereich seiner dem Ventilraum zugewandten Oberfläche aufweisen, wobei dann vorzugsweise die Nut im Wesentlichen radial verläuft.

Die wenigstens eine Drossel ist in der Nut ausgebildet. Hierzu kann der Querschnitt der Nut derart verringert werden, dass eine Drossel ausgebildet wird. Ergänzend kann ein Drosselelement in die Nut und/oder Bohrung eingesetzt sein.

Gemäß der Erfindung ist die Nut zur Ausbildung wenigstens einer Drossel gestuft ausgeführt. Über die Stufe wird die erforderliche Querschnittsverringerung zur Ausbildung der Drossel bewirkt.

Ergänzend kann auch ein Führungsabschnitt der Bohrung des Ventilgehäuses wenigstens eine Drossel ausbilden. Hierzu ist im Bereich dieses Führungsabschnitts das Spiel zwischen dem in der Bohrung aufgenommenen Ventilkolben und dem Ventilgehäuse derart auszulegen, dass die gewünschte Drosselwirkung erzielt wird.

Des Weiteren bevorzugt ist vorgesehen, dass der Ventilraum unmittelbar über wenigstens eine im Ventilgehäuse ausgebildete Radialbohrung mit einem Rücklauf verbindbar ist. Über die Verbindung mit dem Rücklauf ist die über das Ventil abströmende Kraftstoffmenge einem Kraftstoffvorratsbehälter zuführbar. Die wenigstens eine Radialbohrung dient als Ventilausgang.

Die querschnittsbedingte hohe Strömungsgeschwindigkeit des Kraftstoffs im Bereich einer solchen als Ventilausgang dienenden Radialbohrung kann zur Entstehung von Druckwellen und/oder zu einem Staudruck führen, sofern der Ventilausgang unmittelbar mit dem Ventilraum in Verbindung steht. Der Staudruck im Ventilraum bewirkt eine ggf. zusätzliche Druckdifferenz zwischen dem Druck im Ventilraum und dem Druck im Ankerraum. Gemäß einer bevorzugten alternativen Ausführungsform der Erfindung wird daher vorgeschlagen, dass der Ventilraum mittelbar über den Ankerraum mit einem Rücklauf verbindbar ist. Die mittelbare Verbindung über den Ankerraum erfolgt unter Zwischenschaltung wenigstens einer Nut sowie wenigstens einer Drossel, um die Ausbreitung von Druckwellen zu vermeiden.

Alternativ oder ergänzend kann ein zusätzliches hydraulisches Volumen in Form einer im Ventilgehäuse ausgebildeten Sacklochbohrung vorgesehen sein. Vorzugsweise mündet die Sacklochbohrung in den Ankerraum und ist demzufolge über die wenigstens eine Nut und die wenigstens eine Drossel mit dem Ventilraum hydraulisch verbunden. Das zusätzliche hydraulische Volumen dient als Ausgleichsvolumen und verbessert demnach die Kompensation bzw. Dämpfung von Druckwellen. Ferner kann durch Änderung des im Ventilgehäuse vorhandenen Totraums die Eigenfrequenz des Druckregelventils derart beeinflusst bzw. auf den Niederdruckkreis abgestimmt werden, dass die Gefahr von Eigenschwingungen verringert wird.

Des Weiteren wird vorgeschlagen, dass der Anker als Flachanker oder als Tauchanker ausgebildet ist. Das vorgeschlagene Konzept ist somit weitgehend unabhängig von der konkreten Ausbildung des Magnetkreises bzw. der Magnetbaugruppe zur Betätigung des Druckregelventils sowie der Federlage. Das Druckregelventil kann demnach als stromlos geschlossenes oder stromlos offenes Ventil ausgebildet sein.

Bevorzugte Ausführungsformen der Erfindung werden nachfolgend anhand der beigefügten Zeichnungen näher erläutert. Diese zeigen:
Fig. 1 einen schematischen Längsschnitt durch eine erste Ausführungsform eines nicht erfindungsgemäßen Druckregelventils,
Fig. 2a einen schematischen Längsschnitt durch eine zweite Ausführungsform eines nicht erfindungsgemäßen Druckregelventils,
Fig. 2b eine Abwandlung des in der Fig. 2a dargestellten Ventilkolbens,
Fig. 3 einen schematischen Längsschnitt durch eine dritte Ausführungsform eines nicht erfindungsgemäßen Druckregelventils,
Fig. 4 einen schematischen Längsschnitt durch eine vierte Ausführungsform eines nicht erfindungsgemäßen Druckregelventils,
Fig. 5 einen schematischen Längsschnitt durch eine fünfte Ausführungsform eines nicht erfindungsgemäßen Druckregelventils,
Fig. 6 einen schematischen Längsschnitt durch eine sechste Ausführungsform eines nicht erfindungsgemäßen Druckregelventils,
Fig. 7 einen schematischen Längsschnitt durch eine siebte Ausführungsform eines nicht erfindungsgemäßen Druckregelventils,
Fig. 8 einen schematischen Längsschnitt durch eine achte Ausführungsform eines nicht erfindungsgemäßen Druckregelventils,
Fig. 9 einen schematischen Längsschnitt durch eine neunte Ausführungsform eines nicht erfindungsgemäßen Druckregelventils und
Fig. 10 einen schematischen Längsschnitt durch eine bevorzugte Ausführungsform eines erfindungsgemäßen Druckregelventils.

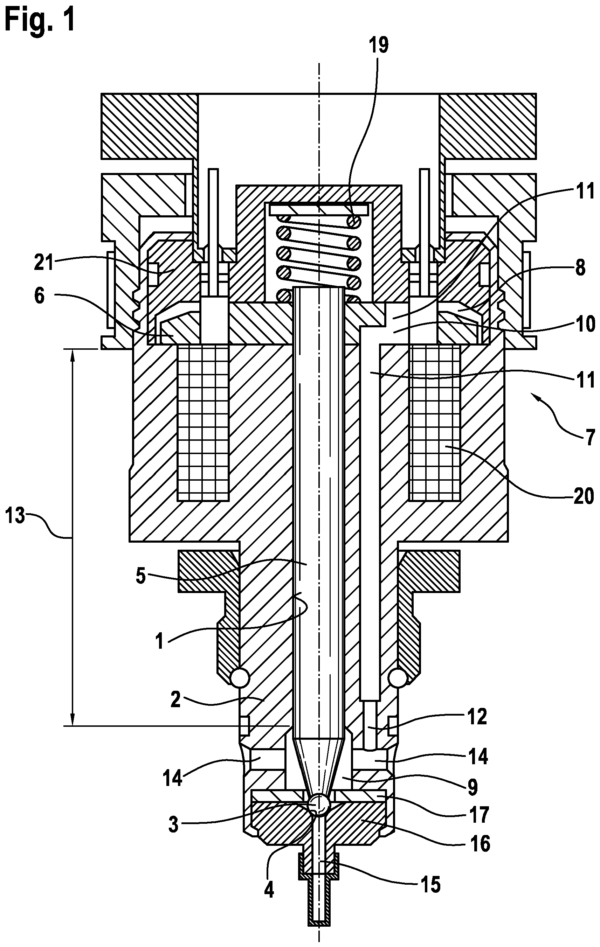

Der Darstellung der Fig. 1 ist der Aufbau eines ersten Ausführungsbeispiels eines nicht erfindungsgemäßen Druckregelventils zu entnehmen. Innerhalb eines Ventilgehäuses 2 ist eine Bohrung 1 ausgebildet, in der ein Ventilkolben 5 axial verschiebbar geführt ist. Der Führungsabschnitt ist mit dem Bezugszeichen 13 gekennzeichnet. Das Ventilgehäuse 2 weist an einem ersten Ende einen ringförmigen Aufnahmeraum für eine Magnetspule 20 einer Magnetbaugruppe 7 auf, welcher koaxial zur Bohrung 1 ausgebildet ist und diese umgibt. An den Aufnahmeraum schließt sich ein Ankerraum 8 an, in dem ein mit der Magnetspule 20 zusammenwirkender Anker 6 der Magnetbaugruppe 7 aufgenommen ist. Der Ankerraum 8 wird von einem topfförmigen Deckelteil 21 umschlossen, so dass ferner ein Aufnahmeraum für eine Feder 19 geschaffen wird, deren Federkraft den Anker 6 in Richtung eines Ventilsitzes 4 belastet.

Bei dem dargestellten Druckregelventil wirkt die Magnetkraft der Magnetspule 20 in die gleiche Richtung wie die Federkraft der Feder 19, so dass über die Magnetspule 20 eine weitere Schließkraft realisierbar ist. Zum Öffnen des Ventils muss der ventileingangsseitig anliegende hydraulische Druck, d.h. der Druck im Hochdruckspeicher, derart ansteigen, dass zumindest die Federkraft der Feder 19 überwunden wird. Die Erfindung umfasst darüber hinaus auch Druckregelventile, bei welchen die Magnetkraft gegen die Federkraft wirkt.

Der Anker 6 ist derart mit dem in der Bohrung 1 des Ventilgehäuses 2 axial verschiebbar geführten Ventilkolben 5 verbunden, dass die Federkraft der Feder 19 und die Magnetkraft der Magnetspule 20 den Anker 6 und den Ventilkolben 5 mit einer Schließkraft in Richtung des Ventilsitzes 4 beaufschlagen. Wird die Bestromung der Magnetspule 20 beendet, kann ein ansteigender Druck im Kraftstoff-Hochdruckspeicher (nicht dargestellt) ein Öffnen des Ventils bewirken. Die Druckdifferenz zwischen eingangsseitigem und ausgangsseitigem Druck führt dann dazu, dass ein vorliegend kugelförmig ausgebildetes Ventilschließelement 3 vom Ventilsitz 4 abhebt. Mit dem Hub des Ventilschließelementes 3 werden auch der Ventilbolzen 5 und der Anker 6 entgegen der Federkraft der Feder 19 in Richtung des Deckelteils 21 bewegt. In dieser Schaltstellung ermöglicht das Druckregelventil eine Verbindung des Kraftstoff-Hochdruckspeichers mit einem Niederdruckkreis (nicht dargestellt). Dabei strömt Kraftstoff aus dem Hochdruckspeicher über einen als zentrale Bohrung in einem Ventilstück 16 ausgebildeten Ventileingang 15, einen Ventilraum 9 und wenigstens eine als Ventilausgang dienende Radialbohrung 14 ab und bewirkt auf diese Weise einen Druckabfall im Hochdruckspeicher. Das Ventilstück 16 ist über eine Distanzscheibe 17 am Ventilgehäuse 2 abgestützt.

Die Ausführung wird vorliegend durch eine im Ventilgehäuse 2 ausgebildete Bohrung 11 sowie eine Drossel 12 realisiert, welche den Ventilraum 9 und den Ankerraum 8 hydraulisch verbinden. Zur Ausbildung der Drossel ist die Bohrung 11 als Stufenbohrung ausgeführt, d.h., dass sie im Bereich der Drossel 12 einen verringerten Strömungsquerschnitt besitzt. Die Bohrung 11 bzw. die Drossel 12 mündet in die als Ventilausgang dienende Radialbohrung 14, so dass die Bohrung 11 und die Drossel 12 mittelbar über die Radialbohrung 14 mit dem Ventilraum 9 verbunden sind. Das andere Ende der Bohrung 11 mündet dagegen unmittelbar in den Ankerraum 8, wobei eine zusätzliche im Anker 6 vorgesehen Nut 10 sowie eine zusätzliche Bohrung 11 den Druckausgleich innerhalb des Ankerraums 8 erleichtern.

Die über die Drossel 12, die Bohrung 11 hergestellte hydraulische Verbindung des Ventilraums 9 mit dem Ankerraum 8 vergrößert das hydraulische Volumen, das zum Ausgleich von Druckschwingungen bzw. Druckwellen zur Verfügung steht. Insofern können über den ausgangsseitig angeschlossenen Niederdrucckreis in den Ventilraum eingebrachte Druckschwingungen bzw. Druckspitzen kompensiert oder zumindest gedämpft werden, so dass eine höhere Funktionssicherheit des Druckregelventils gewährleistet ist. Der Druckausgleich erfolgt zudem schneller.

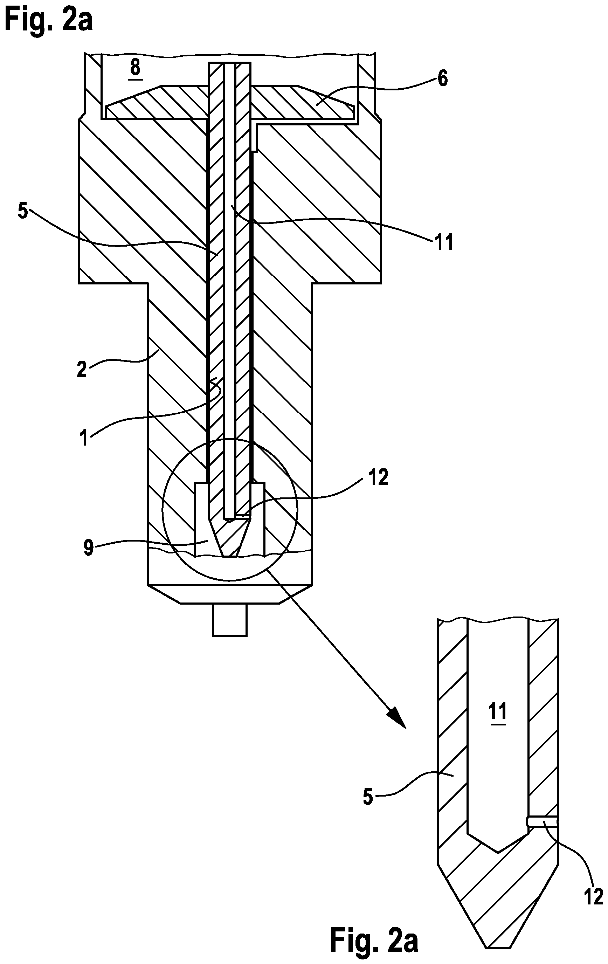

Eine zweite Ausführungsform ist der Fig. 2a zu entnehmen. Die Bohrung 11 und die Drossel 12 sind hier im Ventilkolben 5 ausgebildet. Die Drossel 12 ist als Querbohrung ausgeführt, welche den Ventilraum 9 mit der Bohrung 11 verbindet. Über die Drossel 12 mündet demnach die Bohrung 11 direkt in den Ventilraum 9. Eine Abwandlung dieser Ausführungsform ist in der Fig. 2b dargestellt, bei welcher die Drossel 12 als Stichkanal mit verringertem Querschnitt gegenüber dem Querschnitt der Bohrung 11 ausgeführt ist.

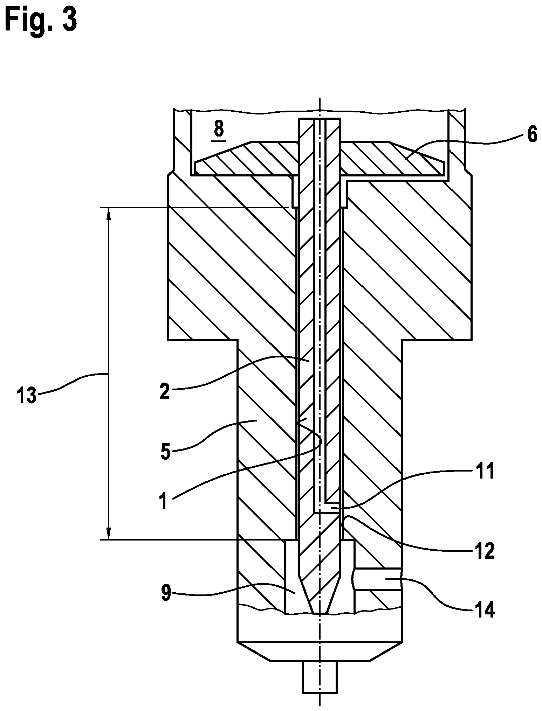

Eine dritte Ausführungsform geht aus der Fig. 3 hervor. Die Bohrung 11 ist wiederum im Ventilkolben 5 ausgebildet und mündet in eine Querbohrung, wobei die Bohrung 11 und die Querbohrung den gleichen Querschnitt besitzen. Die Querbohrung mündet zudem nicht unmittelbar in den Ventilraum 9, sondern mündet in einen Ringspalt, welcher zwischen dem Ventilkolben 5 und dem Ventilgehäuse 2 ausgebildet wird und als Führungsabschnitt 13 dient. Zumindest im unteren Bereich, d.h. im Bereich zwischen dem Ventilraum 9 und der Bohrung 11 bzw. der Querbohrung, weist der Führungsabschnitt 13 daher ein radiales Spiel auf, das die gewünschte Drosselwirkung herbeiführt.

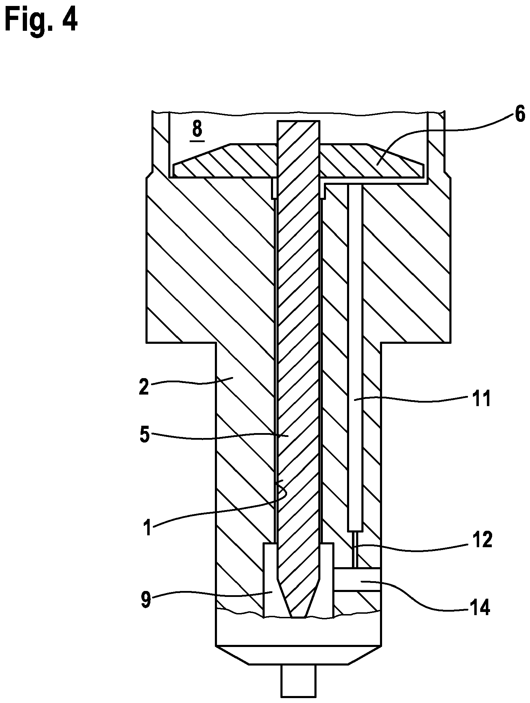

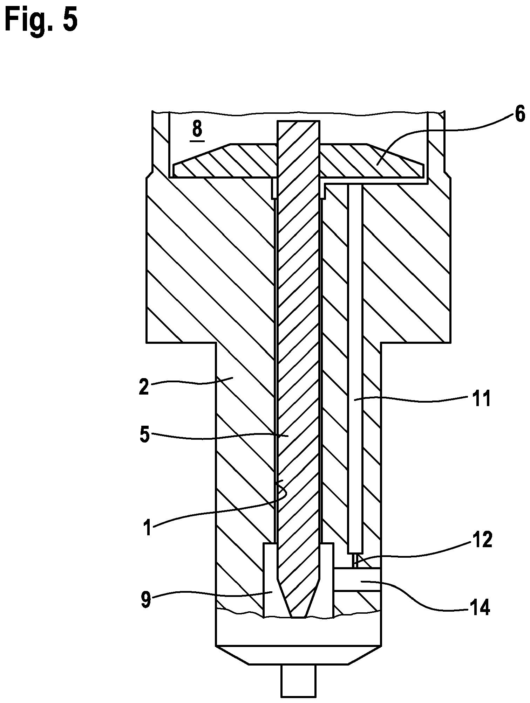

Den Fig. 4 und 5 sind Ausführungsbeispiele zu entnehmen, die dem der Fig. 1 sehr ähnlich sind. Während das Beispiel der Fig. 4 eine als Stufenbohrung ausgeführte Bohrung 11 zur Ausbildung der Drossel 12 zeigt, ist der Fig. 5 ein Beispiel mit einer separat ausgebildeten Drossel zu entnehmen.

Anhand des Ausführungsbeispiels der Fig. 5 werden weiterbildende Maßnahmen aufgezeigt, welche unabhängig von der konkreten Ausbildung der Nut 10 und/oder Bohrung 11 sowie der Drossel 12 ergänzend zum Einsatz gelangen können. Insofern können diese Maßnahmen allein oder kumulativ auch bei den bereits zuvor beschriebenen Ausführungsformen der Fig. 1 bis 4 realisiert werden.

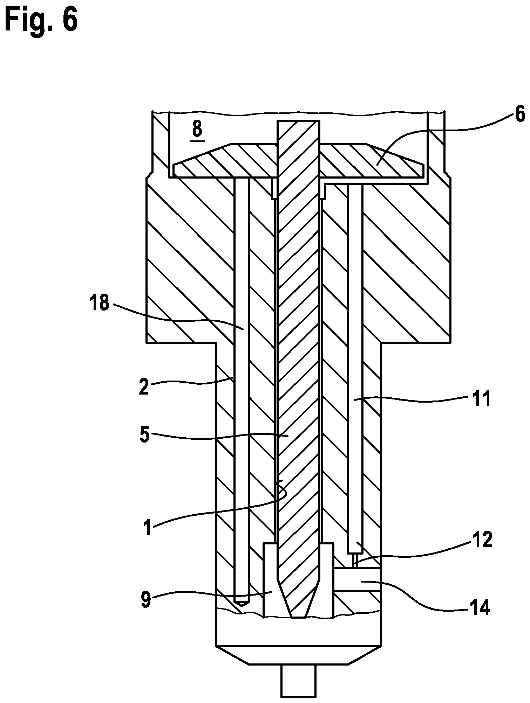

Eine erste weiterbildende ergänzende Maßnahme ist in der Fig. 6 dargestellt. Hier weist das Ventilgehäuse 2 neben der Bohrung 11 eine weitere axial verlaufende Bohrung auf, welche jedoch als Sacklochbohrung ausgeführt ist und ein zusätzliches hydraulisches Volumen 18 schafft, in welches sich der Ankerraum 8 erweitert. Das zusätzliche hydraulische Volumen 18 begünstigt nicht nur die Kompensation bzw. Dämpfung von Druckschwingungen, sondern verändert zugleich die Eigenfrequenz des Druckregelventils, um Eigenschwingungen entgegen zu wirken.

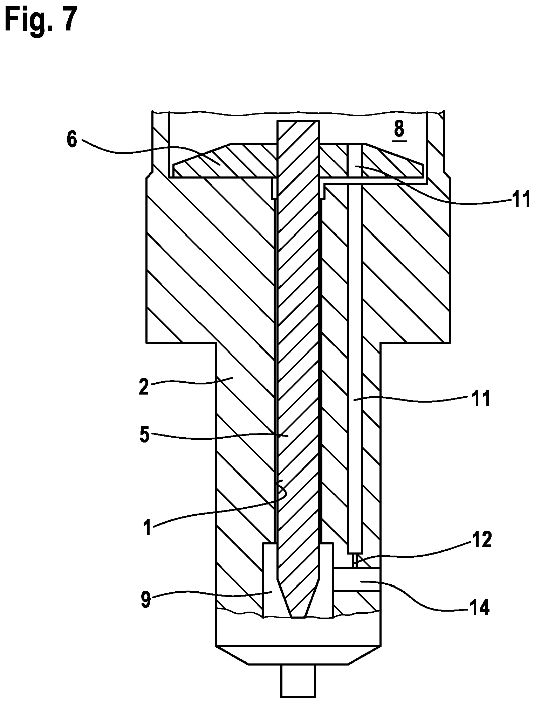

Alternativ oder ergänzend zur in der Fig. 6 dargestellten weiterbildenden Maßnahme kann - wie in der Fig. 7 dargestellt - eine Bohrung 11 im Anker 6 vorgesehen sein. Die Bohrung 11 kann in Verlängerung einer Bohrung 11 im Ventilgehäuse 2 oder versetzt hierzu angeordnet sein. Im letztgenannten Fall ist bevorzugt ferner eine Nut 10 an der Unterseite des Ankers 6 vorzusehen, welche die beiden Bohrungen 11 verbindet (siehe Fig. 1).

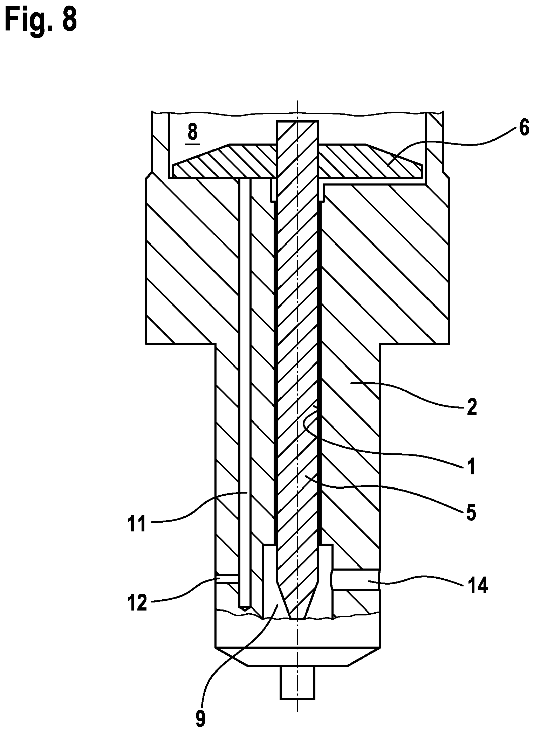

Vorteilhaft ist ferner, wenn der Anschluss des Ventilraums 9 an den Niederdrucckreis nicht unmittelbar über die Radialbohrung 14 erfolgt, sondern mittelbar über den Ankerraum 8. In dem in der Fig. 8 dargestellten Ausführungsbeispiel ist der Ventilraum 9 über die Radialbohrung 14, die Drossel 12, die Bohrung 11 und den Ankerraum 8 an den Niederdruckkreis angeschlossen. Der deutlich verlängerte Strömungsweg wirkt der Übertragung von Druckschwingungen aus dem Niederdruckkreis entgegen. Zudem wird der Einfluss der Strömungsgeschwindigkeit des über die Radialbohrung 14 abfließenden Kraftstoffs verringert.

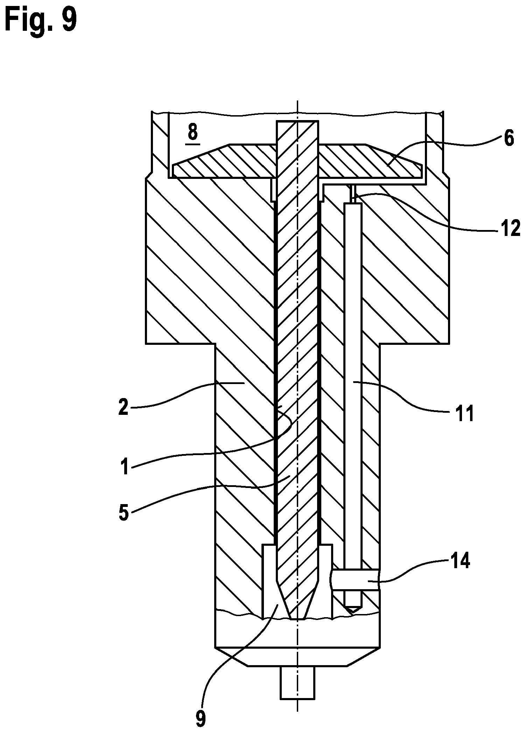

Ein weiteres Ausführungsbeispiel ist in der Fig. 9 dargestellt, welche sich von den vorhergehenden dadurch unterscheidet, dass die Drossel 12 der Bohrung 11 nachgeschaltet ist. Die Bohrung 11 mündet einerseits über die Drossel 12 in den Ankerraum 8 und andererseits über die Radialbohrung 14 in den Ventilraum 9. Auch hier können die in Zusammenhang mit den Fig. 6 bis 8 dargestellten weiterbildenden Maßnahmen ergänzend ausgeführt werden.

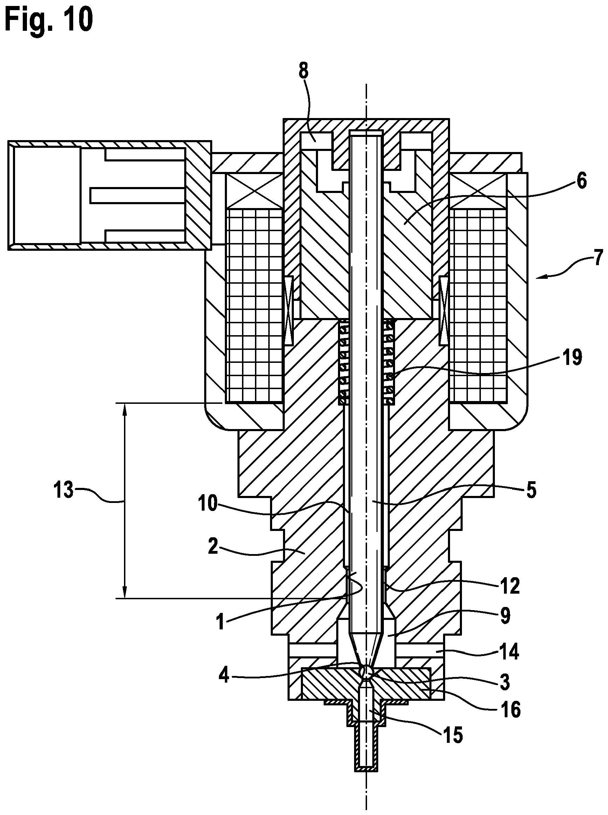

Schließlich ist in der Fig. 10 eine erfindungsgemäße Ausführungsform dargestellt. Hier ist der Anker 6 als Tauchanker ausgebildet und wird von der Federkraft der Feder 19 in Öffnungsrichtung belastet. Das Ventil ist demnach als stromlos offenes Ventil ausgeführt. Die hydraulische Verbindung des Ventilraums 9 mit dem Ankerraum 8 wird vorliegend über Nuten 10 hergestellt, welche axial verlaufend in der Wandung der Bohrung 1 des Ventilgehäuses 2 in äquidistantem Abstand ausgebildet sind. In einem unteren Bereich der zugleich als Führungsabschnitt 13 dienenden Bohrung 1 weisen die Nuten einen verringerten Querschnitt auf, so dass Drosseln 12 ausgebildet werden, welche die Nuten 10 mit dem Ventilraum 9 verbinden. Auch für dieses Ausführungsbeispiel gilt, dass die in den Fig. 6 bis 8 dargestellten weiterbildenden Maßnahmen ergänzend ausgeführt werden können.

Es wird darauf hingewiesen, dass mit Ausnahme der Fig. 1 und 10, die Darstellungen schematisiert sind. Beispielsweise wurde das Ventilgehäuse stark vereinfacht, indem beispielsweise auf die Darstellung des Ventilsitzes 4 und/oder des Ventileingangs 15 und/oder auf eine differenzierte Darstellung des Ventilstücks 16 verzichtet wurde. Dennoch sind auch diese vorhanden. Gleiches gilt für die Magnetbaugruppe 7, sofern nicht oder stark vereinfacht dargestellt.

## Patentansprüche

1. Druckregelventil zur Druckregelung in einem Kraftstoff-Hochdruckspeicher einer Verbrennungskraftmaschine, umfassend einen in einer Bohrung (1) eines Ventilgehäuses (2) axial verschiebbar aufgenommenen, auf ein Ventilschließelement (3) in Richtung eines Ventilsitzes (4) einwirkenden Ventilkolben (5), welcher an seinem dem Ventilsitz (4) abgewandten Ende mit einem Anker (6) einer Magnetbaugruppe (7) zur Betätigung des Druckregelventils verbunden ist, wobei der Anker (6) in einem Ankerraum (8) und das Ventilschließelement (3) in einem Ventilraum (9) aufgenommen sind, wobei der Ventilraum (9) und der Ankerraum (8) über wenigstens eine in der Wandung der Bohrung (1) ausgebildete Nut (10) sowie wenigstens eine Drossel (12) hydraulisch verbunden sind, **dadurch gekennzeichnet, dass** die wenigstens eine Drossel (12) in der Nut (10) ausgebildet ist, wobei zur Ausbildung der wenigstens einen Drossel (12) die Nut (10) gestuft ausgeführt ist.

2. Druckregelventil nach Anspruch 1,
**dadurch gekennzeichnet, dass** ein Führungsabschnitt (13) der Bohrung (1) des Ventilgehäuses (2) die wenigstens eine Drossel (12) ausbildet.

3. Druckregelventil nach einem der vorhergehenden Ansprüche,
**dadurch gekennzeichnet, dass** der Ventilraum (9) unmittelbar über wenigstens eine im Ventilgehäuse (2) ausgebildete Radialbohrung (14) mit einem Rücklauf verbindbar ist.

4. Druckregelventil nach einem der vorhergehenden Ansprüche,
**dadurch gekennzeichnet, dass** der Ventilraum (9) mittelbar über den Ankerraum (8) mit einem Rücklauf verbindbar ist.

5. Druckregelventil nach einem der vorhergehenden Ansprüche,
**dadurch gekennzeichnet, dass** ein zusätzliches hydraulisches Volumen (18) in Form einer im Ventilgehäuse (2) ausgebildeten Sacklochbohrung vorgesehen ist.

6. Druckregelventil nach einem der vorhergehenden Ansprüche,
**dadurch gekennzeichnet, dass** der Anker (6) als Flachanker oder als Tauchanker ausgebildet ist und/oder, dass das Druckregelventil als stromlos geschlossenes oder stromlos offenes Ventil ausgeführt ist, wobei die Wirkrichtung der Magnetkraft der Magnetspule 20 gleichsinnig oder gegensinnig zur Wirkrichtung der Federkraft der Feder 19 sein kann.

## Claims

1. Pressure regulating valve for regulating pressure in a high-pressure fuel accumulator for an internal combustion engine, comprising a valve piston (5) held axially displaceably in a bore (1) of a valve housing (2) and acting on a valve closing member (3) in the direction of a valve seat (4), said valve piston being connected, at its end facing away from the valve seat (4), to an armature (6) of a magnetic assembly (7) for actuating the pressure regulating valve, wherein the armature (6) is held in an armature chamber (8) and the valve closing member (3) is held in a valve chamber (9), wherein the valve chamber (9) and the armature chamber (8) are hydraulically connected via at least one groove (10) formed in the wall of the bore (1) and at least one choke point (12) **characterized in that** the at least one choke point (12) is formed in the groove (10), wherein to form the at least one choke point (12), the groove (10) is formed stepped.

2. Pressure regulating valve according to Claim 1, **characterized in that** a guide portion (13) of the bore (1) of the valve housing (2) forms the at least one choke point (12).

3. Pressure regulating valve according to any of the preceding claims, **characterized in that** the valve chamber (9) can be connected to a return directly via at least one radial bore (14) formed in the valve housing (2).

4. Pressure regulating valve according to any of the preceding claims, **characterized in that** the valve chamber (9) can be connected to a return indirectly via the armature chamber (8).

5. Pressure regulating valve according to any of the preceding claims, **characterized in that** an additional hydraulic volume (18) is provided in the form of a blind bore formed in the valve housing (2).

6. Pressure regulating valve according to any of the preceding claims, **characterized in that** the armature (6) is formed as a flat armature and/or a solenoid plunger, and/or that the pressure regulating valve is formed as a normally closed or normally open valve, wherein the direction of action of the magnetic force of the magnetic coil 20 can be the same or opposite the direction of action of the spring force of the spring 19.

## Revendications

1. Soupape de régulation de pression destinée à réguler la pression dans un accumulateur de carburant à haute pression d'un moteur à combustion interne, la soupape de régulation de pression comprenant un piston de soupape (5) qui est reçu dans un alésage (1) d'un boîtier de soupape (2) de manière à pouvoir coulisser axialement, qui agit sur un élément de fermeture de soupape (3) en direction d'un siège de soupape (4) et qui est relié, à son extrémité opposée au siège de soupape (4), à un induit (6) d'un ensemble d'aimants (7) pour actionner la soupape de régulation de pression, l'induit (6) étant reçu dans un espace d'induit (8) et l'élément de fermeture de soupape (3) étant reçu dans un espace de soupape (9), l'espace de soupape (9) et l'espace d'induit (8) étant reliés hydrauliquement par au moins une gorge (10) formée dans la paroi de l'alésage (1) et par au moins un étranglement (12), **caractérisée en ce que** l'au moins un étranglement (12) est formé dans la gorge (10), la gorge (10) étant étagée pour former au moins un étranglement (12).

2. Soupape de régulation de pression selon la revendication 1, **caractérisée en ce qu'**une partie de guidage (13) de l'alésage (1) du boîtier de soupape (2) forme l'au moins un étranglement (12).

3. Soupape de régulation de pression selon l'une des revendications précédentes, **caractérisée en ce que** l'espace de soupape (9) peut être relié à un retour directement par au moins un alésage radial (14) formé dans le boîtier de soupape (2).

4. Soupape de régulation de pression selon l'une des revendications précédentes, **caractérisée en ce que** l'espace de soupape (9) peut être relié à un retour indirectement par l'espace d'induit (8).

5. Soupape de régulation de pression selon l'une des revendications précédentes, **caractérisée en ce qu'**un volume hydraulique supplémentaire (18) est prévu sous la forme d'un trou borgne formé dans le boîtier de soupape (2).

6. Soupape de régulation de pression selon l'une des revendications précédentes, **caractérisée en ce que** l'induit (6) est conçu sous la forme d'un induit plat ou d'un induit plongeur et/ou **en ce que** la soupape de régulation de pression est conçue comme une soupape fermée hors tension ou ouverte hors tension, le sens d'action de la force magnétique de la bobine magnétique 20 pouvant être de identique ou opposé au sens d'action de la force du ressort 19.
